(19) Europäisches Patentamt
European Patent Office
Office européen des brevets

(11) **EP 4 516 141 A1**

(12) **EUROPEAN PATENT APPLICATION**
published in accordance with Art. 153(4) EPC

(43) Date of publication:
**05.03.2025 Bulletin 2025/10**

(21) Application number: **23794753.6**

(22) Date of filing: **01.03.2023**

(51) International Patent Classification (IPC):
*A24F 40/50* (2020.01)     *A24F 40/40* (2020.01)
*A24F 40/51* (2020.01)     *A24F 40/57* (2020.01)

(86) International application number:
**PCT/CN2023/078952**

(87) International publication number:
**WO 2023/207317 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210462004**

(71) Applicant: **Shenzhen Merit Technology Co., Ltd.**
**Shenzhen, Guangdong 518105 (CN)**

(72) Inventors:
• **LI, Yu**
  **Shenzhen, Guangdong 518105 (CN)**
• **CHEN, Junliang**
  **Shenzhen, Guangdong 518105 (CN)**
• **ZHOU, He**
  **Shenzhen, Guangdong 518105 (CN)**
• **LIANG, Feng**
  **Shenzhen, Guangdong 518105 (CN)**

(74) Representative: **Corradini, Corrado et al**
**Ing. C. Corradini & C. S.r.l.**
**Via Dante Alighieri 4**
**42121 Reggio Emilia (IT)**

(54) **TEMPERATURE MEASUREMENT APPARATUS AND METHOD, COMPUTER DEVICE AND STORAGE MEDIUM**

(57)     A temperature measuring device and method, a computer device and a storage medium. The temperature measuring device includes: a susceptor (100), an oscillation circuit (200) and a controller (300). The susceptor (100) is coupled to the oscillation circuit (200), and the controller (300) is configured to obtain an electrical parameter of the oscillation circuit (200) and calculate a temperature of the susceptor (100) based on the electrical parameter.

FIG. 1

EP 4 516 141 A1

**Description**

RELATED APPLICATION

This application claims priority to Chinese patent application No. 2022104620046, filed with the Chinese Patent Office on April 28, 2022, and entitled "TEMPERATURE MEASURING DEVICE AND METHOD". The contents of the patent are incorporated by reference into this application.

TECHNICAL FIELD

The present application relates to the field of temperature measurement, and in particular to a temperature measuring device, a temperature measuring method, a computer device, and storage medium.

BACKGROUND

At present, heat-not-burn atomization devices are becoming more and more popular among consumers. The heat-not-burn atomization devices bake a solid aerosol-forming substrate at a low temperature to generate aerosol for users to inhale, and control the heating temperature through precise electronic chips, so that the aerosol generated by the heat-not-burn atomization devices contains expected ingredients.

Therefore, for the heat-not-burn atomization devices, how to sense a temperature of a heating element is particularly important.

SUMMARY

A temperature measuring device includes: a susceptor, an oscillation circuit and a controller. The susceptor is coupled to the oscillation circuit. The controller is configured to obtain an electrical parameter of the oscillation circuit and calculate a temperature of the susceptor based on the electrical parameter.

In one of the embodiments, the electrical parameter includes a current feature of the oscillation circuit.

In one of the embodiments, the electrical parameter includes a voltage feature of the oscillation circuit.

In one of the embodiments, a monitoring point is set in the oscillation circuit, and the controller obtains the electrical parameter through the monitoring point.

In one of the embodiments, the susceptor is made of a ferromagnetic material.

In one of the embodiments, the oscillation circuit includes a first capacitor and a first inductor. The first capacitor and the first inductor are connected in series. The susceptor is coupled to the first inductor.

In one of the embodiments, the oscillation circuit comprises a first capacitor and a first inductor. The first capacitor and the first inductor are connected in parallel. The susceptor is coupled to the first inductor.

In one of the embodiments, the device further comprises a power supply circuit, and the oscillation circuit is connected to the power supply circuit.

In one of the embodiments, the power supply circuit comprises a second capacitor. A first terminal of the second capacitor is connected to a power supply and connected to the oscillation circuit respectively. A second terminal of the second capacitor is grounded.

In one of the embodiments, the temperature measuring device further includes a switch tube. A first terminal of the switch tube is connected to the power supply circuit or grounded, and a second terminal of the switch tube is connected to the oscillation circuit.

A temperature measuring method, comprising:

obtaining an electrical parameter of an oscillation circuit; and
calculating a temperature of a susceptor based on the electrical parameter, where the susceptor is coupled to the oscillating circuit.

In one of the embodiments, the electrical parameter comprises a current feature of the oscillation circuit.

In one of the embodiments, the electrical parameter comprises a voltage feature of the oscillation circuit.

A computer device, comprising a memory and a processor. A computer program is stored in the memory. The processor, when executing the computer program, performs steps of a temperature measuring method comprising:

obtaining an electrical parameter of an oscillation circuit; and
calculating a temperature of a susceptor based on the electrical parameter, where the susceptor is coupled to the oscillating circuit.

A computer-readable storage medium, having a computer program stored thereon. The computer program, when executed by a processor, performs steps of a temperature measuring method comprising:

> obtaining an electrical parameter of an oscillation circuit; and
> calculating a temperature of a susceptor based on the electrical parameter, where the susceptor is coupled to the oscillating circuit.

The details of one or more embodiments of the present application are presented in the following drawings and description. Other features, objectives, and advantages of the present application will become apparent from the description, drawings, and claims.

BRIEF DESCRIPTION OF THE DRAWINGS

In order to more clearly describe the solutions in the embodiments of the present application or in the prior art, the accompanying drawings to be used in the description of the embodiments or the prior art will be described briefly. Obviously, the drawings described hereinafter are only for some embodiments of the present application. For those ordinary skilled in the art, other drawings may also be obtained based on the following drawings without creative efforts.

> FIG. 1 is a schematic view showing a block diagram of a temperature measuring device according to an embodiment.
> FIG. 2 is a schematic diagram showing a curve of a magnetic permeability of a ferromagnetic material changing with temperature according to an embodiment.
> FIG. 3 is a schematic circuit diagram of an oscillation circuit according to an embodiment.
> FIG. 4 is a schematic circuit diagram of a circuit for monitoring a current feature in an oscillation circuit according to an embodiment.
> FIG. 5 is a schematic circuit diagram of a circuit for monitoring a voltage feature in an oscillation circuit according to an embodiment.
> FIG. 6 is a schematic view showing a temperature measuring device according to another embodiment.
> FIG. 7 is a circuit diagram showing a detailed oscillation circuit according to an embodiment.
> FIG. 8 is a circuit diagram showing a detailed oscillation circuit according to another embodiment.
> FIG. 9 is a circuit diagram showing a detailed power supply circuit according to an embodiment.
> FIG. 10 is a circuit diagram of a detailed temperature measuring device according to an embodiment.
> FIG. 11 is a schematic flow chart of a temperature measuring method according to an embodiment.
> FIG. 12 is a view showing an internal block diagram of a computer device according to an embodiment.
> FIG. 13 is a circuit diagram of a temperature measuring device according to another embodiment.

DETAILED DESCRIPTION OF THE EMBODIMENTS

In order to facilitate understanding of the present application, the present application will be described more fully hereinafter with reference to the relevant drawings. Embodiments of the present application are provided in the drawings. However, the present application may be implemented in many different forms and is not limited to the embodiments described herein. On the contrary, the purpose of providing these embodiments is to make the disclosure of the present application more thorough and comprehensive.

Unless otherwise defined, all technical and scientific terms used herein have the same meaning as those commonly understood by those ordinary skilled in the art. The terms used herein in the description of this application are only for the purpose of describing specific embodiments, but are not intended to limit this application.

It can be understood that the terms "first", "second", etc., used in the present disclosure may be used to describe various elements, but these elements are not limited by these terms. These terms are only used to distinguish an element from another element.

It should be noted that when an element is considered to be "connected" to another element, it may be directly connected to the other element, or connected to the other element through an intermediate element. In addition, the "connection" in the following embodiments should be understood as "electrical connection", "communication connection", etc., if there is transmission of electrical signals or data between the connected objects.

When used herein, the singular forms "a", "an", and "said/the" may also include plural forms, unless the context clearly indicates otherwise. It should also be understood that the term "include/comprise" or "have" etc., specifies the presence of stated features, wholes, steps, operations, components, parts or combinations thereof, but do not exclude the possibility of the presence of one or more of other features, wholes, steps, operations, components, parts or combinations thereof.

In the related art, a temperature measuring manner for a heating element is implemented mainly by installing a temperature sensor on an aerosol generating device and connecting the temperature sensor to a circuit. In such a manner, the heating element and the circuit cannot be completely separated, and the circuit is complex and has great limitations.

For a temperature measuring device and a temperature measuring method provided by the present invention, a temperature may be measured when a susceptor and an oscillation circuit are separated, and the circuit is simple and suitable for application scenarios such as a temperature measurement of an aerosol generating device or other devices. In an embodiment, the present invention provides a temperature measuring device, including: a susceptor 100, an oscillation circuit 200 and a controller 300. The susceptor 100 is coupled to the oscillation circuit 200. The controller 300 is configured to obtain an electrical parameter of the oscillation circuit 200 and calculate a temperature of the susceptor 100 based on the electrical parameter. Through obtaining the electrical parameter of the oscillation circuit and based on a coupling effect between the susceptor and the oscillation circuit, the above temperature measuring device may obtain a changing state of the susceptor, and then obtain the temperature of the susceptor. The temperature can be measured when the susceptor and the oscillation circuit are separated, and the circuit is simple and easy to implement. Additionally, using a non-contact temperature measuring method, the temperature measuring device is more applicable for the temperature measurement and has fewer limitations.

In this embodiment, the susceptor 100 is coupled to the oscillation circuit 200. A coupled connection means that the susceptor 100 is not directly connected to the oscillation circuit 200, but when parameters of one of the susceptor 100 and the oscillation circuit 200 change, parameters of the other of the susceptor 100 and the oscillation circuit 200 will also change accordingly, which is also the principle of realizing the non-contact temperature measurement between the oscillation circuit 200 and the susceptor 100. In this application, the component of the oscillation circuit 200 is not unique. Generally speaking, the oscillation circuit 200 necessarily includes a capacitor and an inductor. The capacitor and the inductor may be connected in series or in parallel. It can be understood that the connection method between the capacitor and the inductor may be selected by the ordinary skilled in the art according to actual needs. Further, since the capacitor and the inductor are included in the oscillation circuit 200, when an external current is applied to the oscillation circuit 200, the capacitor in the oscillation circuit 200 begins to be charged. After being charged, the capacitor begins to be discharged, and at this time, the current flowing through the inductor is reversed, and the inductor is charged. When the voltage of the inductor reaches the maximum, the capacitor finishes discharging; then the inductor starts to discharge, and the capacitor starts to be charged. Such a cycle is repeated, the oscillation circuit 200 starts to oscillate, and an alternating current is generated in the oscillation circuit 200.

When the current in the oscillating circuit 200 changes, a changing magnetic flux will be generated. At this time, the magnetic flux passing through the susceptor 100 changes, thus causing an induced electromotive force to be generated in the susceptor 100, such that an eddy current is generated in the susceptor 100. When the eddy current in the susceptor 100 changes, the magnetic flux passing through the oscillating circuit 200 changes, thus causing the induced electromotive force to be generated in the oscillating circuit 200, that is, the oscillating circuit 200 and the susceptor 100 generate mutual inductance.

The susceptor 100 is generally made of a magnetic material. When the temperature of the susceptor 100 changes, the magnetic permeability of the susceptor 100 also changes, that is, the magnetic permeability of the susceptor 100 may characterize the temperature of the susceptor 100. Furthermore, since the oscillation circuit 200 and the susceptor 100 generate the mutual inductance, the change in the magnetic permeability of the susceptor 100 causes a change in a mutual inductance between the susceptor 100 and the oscillation circuit 200. The change in the mutual inductance causes a change in an equivalent self-inductance of the inductor in the oscillation circuit 200, thereby causing a change in an electrical parameter of the oscillation circuit 200.

The controller 300 obtains the electrical parameter of the oscillation circuit 200, and calculates the temperature of the susceptor according to the electrical parameter. In this embodiment, the controller 300 may include a Micro Control Unit (MCU) and an A/D sampling unit. Alternatively, the controller 300 may also be implemented by any other unit and a peripheral circuit thereof, which have corresponding functions.

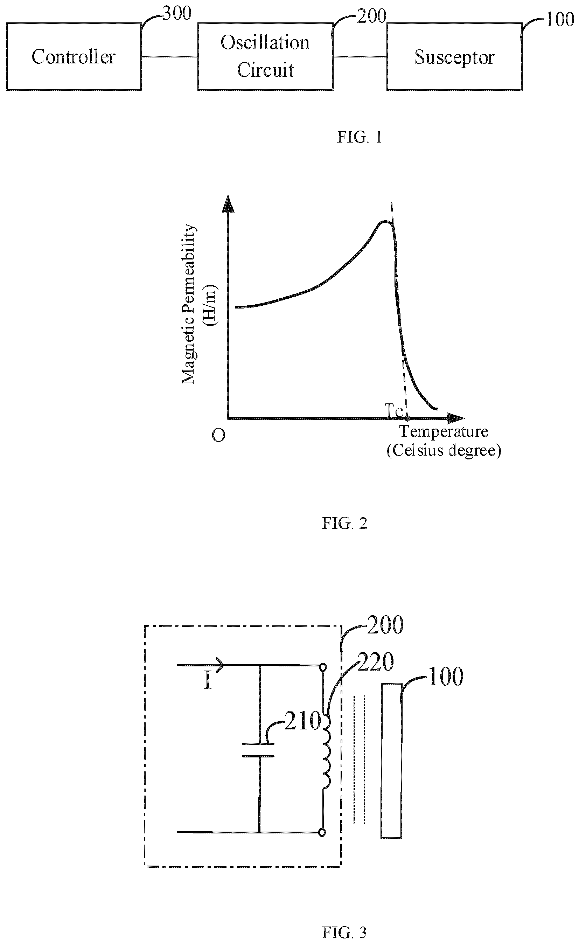

The method for the controller 300 to obtain the electrical parameter of the oscillation circuit 200 is not unique. In this embodiment, as shown in FIG. 1, the controller 300 is connected to the oscillation circuit 200, and then the controller 300 obtains the electrical parameter by setting a monitoring point in the oscillation circuit 200. It may be understood that the controller 300 may also obtain the electrical parameter of the oscillation circuit 200 wirelessly. Those ordinary skilled in the art may select the method for obtaining the electrical parameter of the oscillation circuit 200 according to actual conditions.

The controller 300 realizes a temperature measurement by monitoring the electrical parameter of the oscillation circuit 200. The selectable electrical parameter is not unique, and it may be a voltage feature, a current feature, or a frequency feature of the monitoring point. The selectable monitoring point is not unique. Exemplarily, monitoring points may be set at two terminals of the inductor respectively to obtain the voltage value across the two terminals of the inductor, and the monitoring points may also be set at two terminals of the capacitor to obtain the voltage value across the two terminals of the capacitor. It may be understood that those ordinary skilled in the art may also select other electrical parameters and other monitoring points, as long as the selection can be implemented by them.

The method for the controller 300 to realize a temperature measurement based on the obtained electrical parameter is not unique. For example, the controller 300 may be provided with an artificial intelligence algorithm module, which is configured to learn a relationship between historical electrical parameters of the oscillation circuit 200 and corresponding historical temperatures of the susceptor 100 to obtain a prediction model. In a subsequent temperature measurement process, the controller 300 inputs a currently obtained electrical parameter into the prediction model to obtain a prediction result of the temperature of the susceptor 100, thereby greatly improving the degree of automation.

Exemplarily, as shown in FIG. 3, the oscillation circuit 200 includes a first capacitor 210 and a first inductor 220. The first terminal of the first capacitor 210 is connected to the first terminal of the first inductor 220, and the second terminal of the first capacitor 210 is connected to the second terminal of the first inductor 220. An external current $I$ is applied to the oscillation circuit 200, and the oscillation circuit 200 operates, and the susceptor 100 and the oscillation circuit 200 generate mutual inductance. When the temperature of the susceptor 100 changes, the magnetic permeability of the susceptor 100 changes accordingly, and the equivalent self-inductance of the oscillation circuit 200 also changes accordingly, and the corresponding electrical parameters in the oscillation circuit 200 change as well. In this embodiment, the voltage feature is selected as the monitoring value, and monitoring points are set at the two terminals of the first inductor 220 respectively. The controller 300 obtains the voltage values across the monitoring points within a period of time, and obtains the temperature of the susceptor 100 by looking up a table or by regression fitting.

In one of the embodiments, the electrical parameter includes a current feature of the oscillating circuit 200.

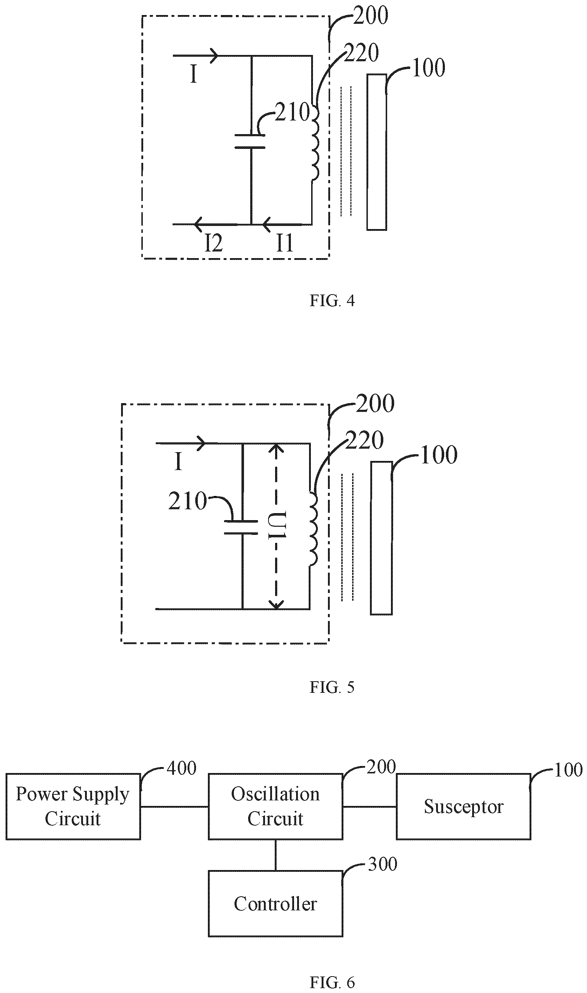

In this embodiment, as shown in FIG. 4, the oscillation circuit 200 includes a first capacitor 210 and a first inductor 220. The first terminal of the first capacitor 210 is connected to the first terminal of the first inductor 220, and the second terminal of the first capacitor 210 is connected to the second terminal of the first inductor 220. An external current $I$ is applied to the oscillation circuit 200, and the oscillation circuit 200 operates. The susceptor 100 and the oscillation circuit 200 generate mutual inductance, and an eddy current is generated in the susceptor 100. When the temperature of the susceptor 100 changes, the magnetic permeability of the susceptor 100 changes accordingly, then the mutual inductance between the susceptor 100 and the oscillation circuit 200 changes. The mutual inductance is superimposed on the self-inductance of the oscillation circuit 200, resulting in a change in the equivalent self-inductance of the inductor coil in the oscillation circuit 200. Referring to Equation (1):

$$u_L(t) = \frac{\mathrm{d}\,\psi(t)}{\mathrm{d}t} = \frac{\mathrm{d}Li_L(t)}{\mathrm{d}t} = L\,\frac{\mathrm{d}i_L(t)}{\mathrm{d}t} \qquad\qquad (1)$$

Wherein, $L$ denotes the equivalent self-inductance of the oscillation circuit 200, $i_L(t)$ denotes a function of the current $I$ flowing through the first inductor 220, which changes with time $t$, and $u_L(t)$ denotes a function of the voltage $U$ across the first inductor 220, which changes with time t. Equation (1) indicates that the equivalent self-inductance of the oscillation circuit 200 is directly proportional to the voltage across the first inductor 220 in the oscillation circuit 200 at a time point, and is inversely proportional to a change rate of the current flowing through the first inductor 220 at the time point. That is, any change in the equivalent self-inductance $L$ of the oscillation circuit 200 will be reflected in the change rate of the current flowing through the first inductor 220 at each time point, so the current feature of the oscillation circuit 200 may include parameters such as the change rate of the current flowing through the first inductor 220 at each time point, the amplitude of the current flowing through the first inductor 220, or the effective value of the current flowing through the first inductor 220 over a time period. By measuring multiple sets of current features of the oscillating circuit 200 and temperature data of the susceptor 100, the relationship between the current feature of the oscillating circuit 200 and the temperature of the susceptor 100 can be obtained by means of regression analysis, etc.

Exemplarily, as shown in FIG. 4, the controller 300 sets a monitoring point at one terminal of the first inductor 220 to obtain the current $I_1$ flowing through the first inductor 220 in the oscillation circuit 200 during a time period, thus obtaining the change rate of the current $I_1$ flowing through the first inductor 220 at each time point. The controller 300 fits multiple sets of change rates of the currents $I_1$, which flow through the first inductor 220 in the oscillation circuits 200 and are measured at various time points in the past, and the temperature data of the susceptor 100, thus obtaining the relationship between the change rate of the current $I_1$ and the temperature of the susceptor 100, and realizing a temperature measurement. The controller 300 may also obtain the current $I2$ flowing through the entire oscillation circuit 200 for a time period, and calculate the current value $I_1$ flowing through the first inductor 220 based on the current value I2, and repeat the above operations to realize the temperature measurement.

In one of the embodiments, the electrical parameter includes a voltage feature of the oscillator circuit 200.

In this embodiment, as shown in FIG. 5, the oscillation circuit 200 includes a first capacitor 210 and a first inductor 220. The first terminal of the first capacitor 210 is connected to the first terminal of the first inductor 220, and the second terminal of the first capacitor 210 is connected to the second terminal of the first inductor 220. An external current $I$ is applied to the oscillation circuit 200 and the oscillation circuit 200 operates, and the susceptor 100 and the oscillation circuit 200 generate mutual inductance, and an eddy current is generated in the susceptor 100. When the temperature of the susceptor 100 changes, the magnetic permeability of the susceptor 100 changes accordingly, then the mutual inductance between the susceptor 100 and the oscillation circuit 200 changes. The change in the mutual inductance is superimposed on the self-inductance of the oscillation circuit 200, resulting in a change in the equivalent self-inductance of the inductor in the oscillation circuit 200. It can be obtained from Equation (1) that the equivalent self-inductance $L$ of the oscillation circuit 200 is directly proportional to the voltage across the first inductor 220 in the oscillation circuit 200 at a time period, and is inversely proportional to the change rate of the current flowing through the first inductor 220 at the time period. That is, any change in the equivalent self-inductance $L$ of the oscillation circuit 200 will be reflected in the voltage across the first inductor 220 in the oscillation circuit 200 at a time point. Therefore, the voltage feature of the oscillation circuit 200 may include parameters such as the voltage across the first inductor 220 in the oscillation circuit 200 at each time point, the amplitude of the voltage across the first inductor 220, or the effective value of the voltage across the first inductor 220 over a time period. By measuring multiple sets of voltage features of the oscillation circuit 200 and temperature data of the susceptor 100, the relationship between the voltage feature of the oscillation circuit 200 and the temperature of the susceptor 100 can be obtained by means of regression analysis, etc.

Exemplarily, as shown in FIG. 5, the controller 300 sets monitoring points at two terminals of the first inductor 220 or at two terminals of the first capacitor 210, so as to obtain the voltages $U1$ across the first inductor 220 in the oscillation circuit 200 at various time points over a time period. The controller 300 fits multiple sets of the voltages $U1$ of the first inductor 220, which are measured at various time points in the past, and the temperature data of the susceptor 100, thus obtaining the relationship between the voltage value $U1$ and the temperature of the susceptor 100, and realizing the temperature measurement.

In one of the embodiments, the susceptor 100 is made of a ferromagnetic material.

In this embodiment, the susceptor 100 is a ferromagnetic material, that is, the susceptor 100 is made of a ferromagnetic material. As shown in FIG. 2, the magnetic permeability of the ferromagnetic material changes with temperature. When the temperature of the ferromagnetic material is much lower than the Curie temperature $Tc,$ a temperature measurement may be realized based on the property that the magnetic permeability of the ferromagnetic material is positively correlated with the temperature. When the temperature of the ferromagnetic material is proximate to the Curie temperature $Tc,$ there are two regions adjacent to the Curie temperature $Tc.$ In one region, the temperature is positively correlated with the magnetic permeability, and in the other region, the temperature is negatively correlated with the magnetic permeability. The temperature measurement may be realized based on the different properties of different regions. That is, the magnetic permeability of the ferromagnetic material is used to characterize the temperature of the ferromagnetic material. Furthermore, the magnetic permeability of the ferromagnetic material changes greatly with temperature, thus the measurement result will be more intuitive by using a ferromagnetic material as the susceptor 100. It can be understood that the susceptor 100 may also be made of other magnetic materials, and the change trend of the magnetic permeability of other magnetic materials changing with temperature is not necessarily the same as that shown in FIG. 2. Those ordinary skilled in the art may select a specific type of the susceptor 100 according to actual needs.

In one of the embodiments, as shown in FIG. 6, the temperature measuring device further includes a power supply circuit 400. The oscillation circuit 200 is connected to the power supply circuit 400.

The power supply circuit 400 is configured to apply a voltage to the oscillation circuit 200, so that the oscillation circuit 200 generates an alternating current.

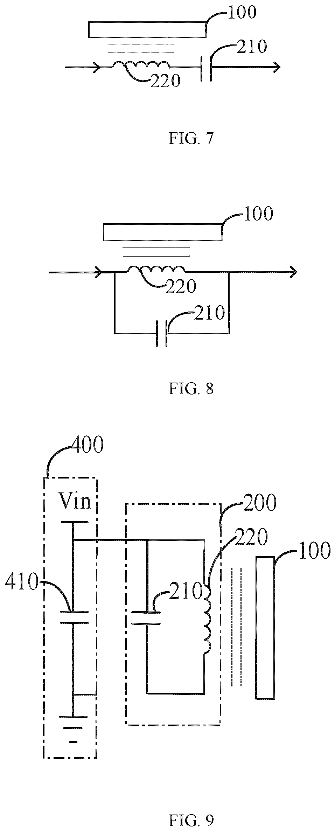

In one of the embodiments, as shown in FIG. 7, the oscillation circuit 200 includes a first capacitor 210 and a first inductor 220. The first capacitor 210 and the first inductor 220 are connected in series, and the susceptor 100 is coupled to the first inductor 220. In this embodiment, the first terminal of the first capacitor 210 is connected to the first terminal of the first inductor 220, the susceptor 100 is coupled to the first inductor 220, and the controller 300 may monitor the electrical parameters at two terminals of the first capacitor 210 or at two terminals of the first inductor 220.

In one of the embodiments, as shown in FIG. 8, the oscillation circuit 200 includes a first capacitor 210 and a first inductor 220. The first capacitor 210 and the first inductor 220 are connected in parallel, and the susceptor 100 is coupled to the first inductor 220. In this embodiment, the first terminal of the first capacitor 210 is connected to the first terminal of the first inductor 220, and the second terminal of the first capacitor 210 is connected to the second terminal of the first inductor 220, and the controller 300 may monitor the electrical parameters at two terminals of the first capacitor 210 or at two terminals of the first inductor 220.

It may be understood that any change in the equivalent self-inductance in the oscillation circuit 200 will be reflected in the voltage feature and the current feature. Therefore, the connection between the first capacitor 210 and the first inductor 220 in the oscillation circuit 200 is not unique and may be any connection those ordinary skilled in the art consider it implementable.

In one of the embodiments, as shown in FIG. 9, the power supply circuit 400 further includes a second capacitor 410. A first terminal of the second capacitor 410 is connected to the oscillation circuit 200, and a second terminal of the second capacitor 410 is grounded.

In this embodiment, the power supply circuit 400 includes the second capacitor 410. The first terminal of the second capacitor 410 is connected to the oscillation circuit 200, and the second terminal of the second capacitor 410 is grounded. The second capacitor can effectively filter out noise and alternating components in the power supply circuit, thus avoiding self-excitation, stabilizing the operating state of the power supply circuit, and storing electrical energy.

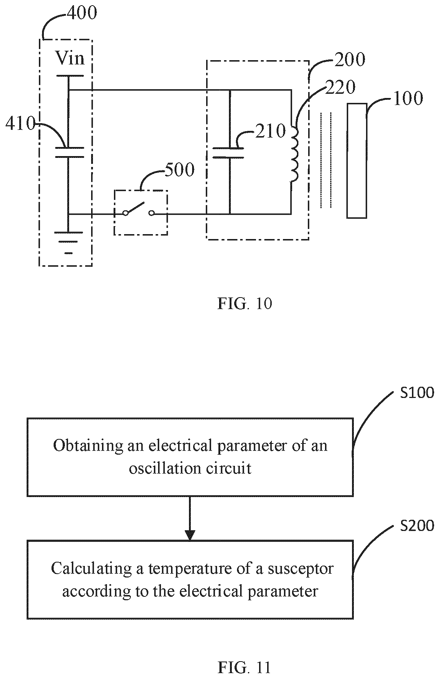

In one of the embodiments, the temperature measuring device further includes a switch tube 500. A first terminal of the switch tube 500 is connected to the power supply circuit 400 or grounded, and a second terminal of the switch tube 500 is connected to the oscillation circuit 200. Exemplarily, the oscillation circuit 200 includes a first capacitor 210 and a first inductor 220. When the first capacitor 210 and the first inductor 220 are connected in parallel, as shown in FIG. 10, the first terminal of the switch tube 500 is grounded, and the second terminal of the switch tube 500 is connected to the oscillation circuit 200, i.e., connected to the first terminal of the first capacitor 210 and the first terminal of the first inductor 220. The switch tube 500 controls the oscillation circuit 200 to be connected to the power supply circuit 400 or not, so that the oscillation circuit 200 generates an alternating current. Further, the switch tube 500 may be further connected to the controller 300. The controller 300 controls the switch tube 500 to be tuned on or turned off, thereby achieving a precise regulation.

A temperature measuring method, as shown in FIG. 11, includes following steps.

In S100, an electrical parameter of an oscillation circuit is obtained.

In this embodiment, by setting monitoring points in the oscillation circuit, the controller may obtain the electrical parameter of the monitoring points, such as a current flowing through a monitoring point, or the voltage across two monitoring points. It may be understood that those skilled in the art may set monitoring points and select corresponding electrical parameters according to actual conditions, as long as the setting and the selection can be implemented by them.

In S200, a temperature of a susceptor is calculated based on the electrical parameter, where the susceptor is coupled to the oscillating circuit.

In this embodiment, the susceptor is coupled to the oscillation circuit. When the current in the oscillation circuit changes, a changing magnetic flux will be generated. At this time, the magnetic flux passing through the susceptor changes, causing an induced electromotive force to be generated in the susceptor and causing an eddy current to be generated in the susceptor. When the eddy current in the susceptor changes, the magnetic flux passing through the oscillation circuit changes, thereby causing an induced electromotive force to be generated in the oscillation circuit, that is, the oscillation circuit and the susceptor generate mutual inductance. Further, when the temperature of the susceptor changes, the magnetic permeability of the susceptor changes accordingly. The change in the magnetic permeability of the susceptor causes the mutual inductance between the susceptor and the oscillation circuit to change. The change in the mutual inductance further causes the equivalent self-inductance of the inductor in the oscillation circuit to change, thereby causing the electrical parameters in the oscillation circuit to change. That is, the change in the temperature of the susceptor will be reflected in the electrical parameters of the oscillation circuit. After measuring the corresponding electrical parameters, the temperature of the susceptor can be obtained by means of looking up a table or by means of fitting.

For the specific limitations on the temperature measuring method, please refer to the limitations on the temperature measuring device above, which will not be described repeatedly hereinafter.

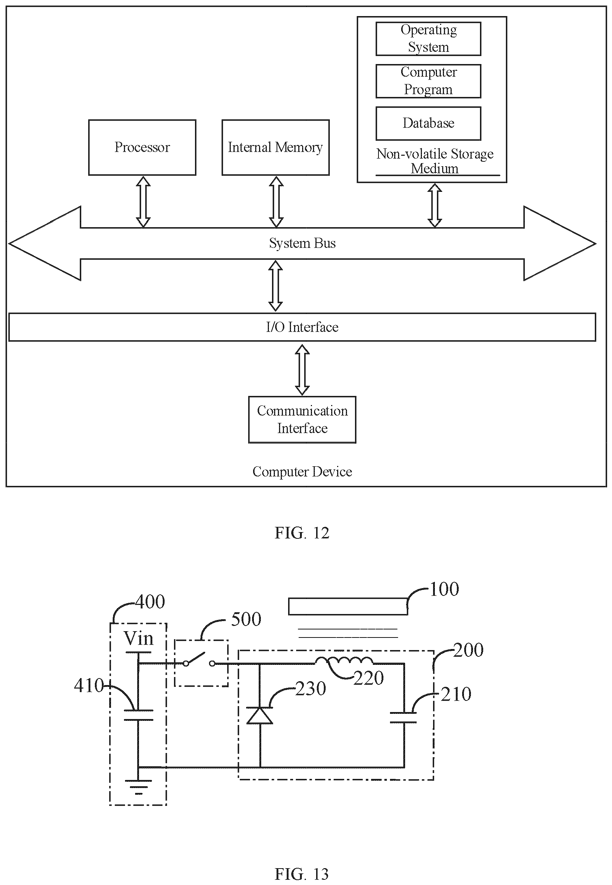

In an embodiment, a computer device is also provided. An internal structure of the computer device may be shown in FIG. 12. The computer device includes a processor, a memory, and a network interface, which are connected through a system bus. The processor of the computer device is configured to provide computing and control capabilities. The memory of the computer device includes a non-volatile storage medium and an internal memory. The non-volatile storage medium stores an operating system, a computer program, and a database. The internal memory provides an environment for the operation of the operating system and the computer program which are stored in the non-volatile storage medium. The network interface of the computer device is configured to communicate with an external terminal through a network connection. The computer program, when executed by the processor, performs any one of the temperature measuring methods described above.

Those skilled in the art should understand that the structure shown in the block diagram of FIG. 12 is merely partial structure related to the solutions of the present application, and does not constitute a limitation on the computer device to which the solutions of the present application are applied. Specifically, the computer device may include more or fewer components than those shown in the figure, or may combine some of the components, or have a different arrangement of the components.

In an embodiment, a computer device is provided, and includes a memory and a processor. The memory stores a computer program. The processor, when executing the computer program, implements the steps of any one of the method embodiments as described above.

In an embodiment, the present invention provides a computer-readable storage medium, on which a computer program is stored. The computer program, when executed by a processor, performs the steps of the above method embodiments.

It should be understood by those ordinary skilled in the art that all or part of the processes of the above-mentioned method embodiments may be implemented by the relevant hardware according to instructions of a computer program. The computer program may be stored in a non-volatile computer-readable storage medium. The computer program, when executed, may include the processes of the above-mentioned method embodiments. Any reference to the memory, the storage, the database, or other medium used in the embodiments provided in the present application may include at least one of the non-volatile memory and the volatile memory. The non-volatile memory may include read-only memory (ROM), magnetic tape, floppy disk, flash memory, or optical memory, etc. The volatile memory may include random access memory (RAM) or external cache memory. As illustration but not limitation, the RAM may be in various forms, such as static random access memory (SRAM) or dynamic random access memory (DRAM).

In order to make the above-mentioned temperature measuring device and temperature measuring method to be better understood, a detailed description is provided hereinafter in conjunction with a specific embodiment.

In a heat-not-burn atomization device, it is very important to sense the temperature of the heating element. However, in the related art, a temperature measuring method for a heating element is implemented mainly by installing a temperature sensor on an aerosol generating device and connecting the temperature sensor to a circuit. In such a method, the heating element and the circuit cannot be completely separated, and the circuit is complex and has great limitations.

Based on this, the present application provides a temperature measuring device including: a susceptor 100, an oscillation circuit 200, a controller 300, a power supply circuit 400, and a switch tube 500. The susceptor 100 is coupled to the oscillation circuit 200. The oscillation circuit 200 is connected to the power supply circuit 400. The controller 300 obtains the electrical parameter of the oscillation circuit 200 by setting a monitoring point in the oscillation circuit 200, and calculates the temperature of the susceptor 100 based on the electrical parameter.

The power supply circuit 400 applies a voltage to the oscillation circuit 200. The power supply circuit 400 includes a second capacitor 410. The oscillation circuit 200 includes a first capacitor 210, a first inductor 220, and a diode 230. As shown in FIG. 13, in an exemplary embodiment of the present invention, the first capacitor 210 and the first inductor 220 are connected in series. The oscillation circuit 200 further includes the diode 230. The switch tube 500 is also configured to be connected to the controller 300. The first terminal of the first inductor 220 and a cathode of the diode 230 are connected to the second terminal of the switch tube 500. The first terminal of the switch tube 500 is connected to the power supply circuit 400. The second terminal of the first inductor 220 is connected to the first terminal of the first capacitor 210. The second terminal of the first capacitor 210 and the anode of the diode 230 are both grounded. The first terminal of the second capacitor 410 is connected to the power supply, and is also connected to the oscillation circuit 200 through the switch tube 500, specifically, connected to the first terminal of the first inductor 220 and the cathode of the diode 230 in the oscillation circuit 200. The second terminal of the second capacitor 410 is grounded.

When the controller 300 controls the switch tube 500 to be turned on, the oscillation circuit 200 is connected to the power supply circuit 400. When the switch tube 500 is turned on, the first capacitor 210 and the first inductor 220 start to be charged at the same time. After the first capacitor 210 and the first inductor 220 are charged, the switch tube 500 is turned off. At this time, the first capacitor 210 has been charged and starts to discharge, and the current flowing through the first inductor 220 is reversed. When the first capacitor 210 finishes discharging, the first inductor 220 starts to discharge, and the first capacitor 210 starts to be charged. Such a cycle is repeated. During the reciprocating process, the oscillation circuit 200 starts to oscillate, and an alternating current is generated in the oscillation circuit 200. The susceptor 100 is made of a ferromagnetic material. When the current in the oscillation circuit 200 changes, a changing magnetic flux is generated. At this time, the magnetic flux passing through the susceptor 100 changes, causing an induced electromotive force to be generated in the susceptor 100, and an eddy current is generated in the susceptor 100. When the eddy current in the susceptor 100 changes, the magnetic flux passing through the oscillating circuit 200 changes, thereby causing an induced electromotive force to be generated in the oscillating circuit 200, that is, the oscillating circuit 200 and the susceptor 100 generate mutual inductance.

As shown in FIG. 2, when the temperature of the susceptor 100 changes, the magnetic permeability of the susceptor 100 changes accordingly. Further, the self-inductance in the oscillating circuit 200 may be obtained by equation (2):

$$L_{self} = \mu_0 n^2 lS \qquad (2)$$

Where, $L_{self}$ denotes the self-inductance of the oscillation circuit 200, $\mu_0$ denotes the relative magnetic permeability of air, n denotes the number of coil turns of the first inductor 220, $l$ denotes a coil length of the first inductor 220, and S denotes a coil cross-sectional area of the first inductor 220. The parameters $\mu_0$, n, l, and S are all known, so the self-inductance in the oscillation circuit 200 can be obtained based on Equation (2).

The oscillating circuit 200 and the susceptor 100 generate the mutual inductance, which is superimposed on the self-inductance of the oscillating circuit 200. When the magnetic permeability of the susceptor 100 changes, the mutual inductance generated by the oscillating circuit 200 and the susceptor 100 changes as well, and the mutual inductance coefficient between the oscillating circuit 200 and the susceptor 100 may be obtained from Equation (3):

$$M = k\sqrt{L_{self}L_{susceptor}} \qquad (3)$$

Where, M denotes the mutual inductance coefficient between the oscillating circuit 200 and the susceptor 100, $k$

is a constant, $L_{self}$ denotes the self-inductance of the oscillating circuit 200, and $L_{susceptor}$ denotes the self-inductance of the susceptor 100.

That is, the mutual inductance coefficient $M$ between the oscillating circuit 200 and the susceptor 100 is related to the self-inductance $L_{self}$ of the oscillating circuit 200 and the self-inductance $L_{susceptor}$ of the susceptor 100. The relative magnetic permeability $\mu_0$ of air, the coil cross-sectional area $S$ of the first inductor 220, the number n of coil turns of the first inductor 220, and the coil length $l$ of the first inductor 220 are known, therefore the self-inductance $L_{self}$ of the initial oscillating circuit 200 is determined. Thus, when the magnetic permeability of the susceptor 100 changes, the self-inductance $L_{susceptor}$ of the susceptor 100 changes, and the mutual inductance coefficient $M$ between the oscillating circuit 200 and the susceptor 100 will change accordingly, thereby causing the equivalent self-inductance $L$ of the oscillating circuit 200 to change.

Further, the mutual inductance coefficient M between the oscillating circuit 200 and the susceptor 100 changes, and at this time, the equivalent self-inductance in the oscillating circuit 200 is denoted as $L$. It can be obtained from Equation (1) that the equivalent self-inductance $L$ of the oscillating circuit 200 is directly proportional to the voltage across the first inductor 220 in the oscillating circuit 200 at a time point, and is inversely proportional to the change rate of the current flowing through the first inductor 220 at the time point. That is, any change in the equivalent self-inductance $L$ in the oscillating circuit 200 will be reflected in the voltage feature and the current feature of the oscillating circuit 200. The voltage feature or the current feature of the oscillating circuit 200 is obtained, and the temperature of the susceptor 100 is obtained by means of looking up a table or by means of linear fitting. Further, the above-mentioned temperature measuring device and temperature measuring method characterize the magnetic permeability of the susceptor 100 and then characterize the temperature of the susceptor 100 by using the voltage feature or the current feature of the oscillating circuit 200, rather than using parameters such as the frequency features of the oscillating circuit 200, thus a relatively fast monitoring speed and a monitoring accuracy are not required, and the flexibility of monitoring the voltage feature or the current feature of the oscillating circuit 200 is relatively high. For example, a voltage peak value or a current peak value in a single cycle may be used to reflect the temperature, or a change in an effective value of the voltage or current may be used to indirectly reflect the temperature, which can reduce the performance requirements for the controller 300 to some extent.

In summary, after entering a stable working state, the temperature measuring device obtains the voltage feature of the oscillation circuit 200 or the current feature of the oscillation circuit 200 to obtain the equivalent self-inductance $L$ of the oscillation circuit 200, and then the mutual inductance coefficient $M$ is obtained based on the equivalent self-inductance $L$. Based on the mutual inductance coefficient $M$, the self-inductance value $L_{self}$ of the susceptor 100 can be obtained, and then the magnetic permeability of the susceptor 100 and the temperature of the susceptor 100 are obtained.

In the above-mentioned temperature measuring device and temperature measuring method, the temperature measuring device includes the susceptor, the oscillation circuit, and the controller. The susceptor is coupled to the oscillation circuit. The controller obtains the electrical parameter of the oscillation circuit and calculates the temperature of the susceptor based on the electrical parameter. Based on the coupling effect between the susceptor and the oscillation circuit, the temperature measuring device and temperature measuring method above may obtain the changing state of the susceptor by obtaining the electrical parameter of the oscillation circuit, and then obtains the temperature of the susceptor. Thus, the temperature can be measured when the susceptor and the oscillation circuit are separated, and the circuit is simple and easy to implement. What's more, a non-contact temperature measuring method is used, therefore the temperature measuring method is more applicable and has fewer limitations.

In the description of this specification, the terms "one embodiment", "some embodiments", "ideal embodiments", etc., mean that the specific features, structures, materials or features, described in conjunction with the embodiment or example, are included in at least one embodiment or example of the present application. In this specification, the illustrative description of the above terms does not necessarily refer to the same embodiment or example.

The technical features of the above-mentioned embodiments may be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions thereof are relatively specific and detailed, but they should not be construed as limiting the scope of the present patent application. It should be understood by those of ordinary skill in the art that various modifications and improvements may be made without departing from the concept of the present application, and they all fall within the protection scope of the present application. Therefore, the patent protection of the present application shall be defined by the appended claims.

**Claims**

1. A temperature measuring device, **characterized by** comprising: a susceptor, an oscillation circuit and a controller;

wherein the susceptor is coupled to the oscillation circuit; andthe controller is configured to obtain an electrical parameter of the oscillation circuit and calculate a temperature of the susceptor based on the electrical parameter.

2. The temperature measuring device according to claim 1, wherein the electrical parameter comprises a current feature of the oscillation circuit.

3. The temperature measuring device according to claim 1, wherein the electrical parameter comprises a voltage feature of the oscillation circuit.

4. The temperature measuring device according to claim 2 or 3, wherein a monitoring point is set in the oscillation circuit, and the controller obtains the electrical parameter through the monitoring point.

5. The temperature measuring device according to claim 1, wherein the susceptor is made of a ferromagnetic material.

6. The temperature measuring device according to claim 1, wherein the oscillation circuit comprises a first capacitor and a first inductor; the first capacitor and the first inductor are connected in series; and the susceptor is coupled to the first inductor.

7. The temperature measuring device according to claim 1, wherein the oscillation circuit comprises a first capacitor and a first inductor; the first capacitor and the first inductor are connected in parallel; and the susceptor is coupled to the first inductor.

8. The temperature measuring device according to claim 1, further comprising a power supply circuit, and the oscillation circuit is connected to the power supply circuit.

9. The temperature measuring device according to claim 8, wherein the power supply circuit comprises a second capacitor; a first terminal of the second capacitor is connected to a power supply and connected to the oscillation circuit respectively; and a second terminal of the second capacitor is grounded.

10. The temperature measuring device according to claim 8, further comprising a switch tube, wherein a first terminal of the switch tube is connected to the power supply circuit or grounded, and a second terminal of the switch tube is connected to the oscillation circuit.

11. A temperature measuring method, **characterized by** comprising:

    obtaining an electrical parameter of an oscillation circuit; and
    calculating a temperature of a susceptor based on the electrical parameter, wherein the susceptor is coupled to the oscillating circuit.

12. The temperature measuring method according to claim 11, wherein the electrical parameter comprises a current feature of the oscillation circuit.

13. The temperature measuring method according to claim 11, wherein the electrical parameter comprises a voltage feature of the oscillation circuit.

14. A computer device, **characterized by** comprising a memory and a processor, wherein a computer program is stored in the memory, and the processor, when executing the computer program, performs steps of a temperature measuring method comprising:

    obtaining an electrical parameter of an oscillation circuit; and
    calculating a temperature of a susceptor based on the electrical parameter, wherein the susceptor is coupled to the oscillating circuit.

15. A computer-readable storage medium, having a computer program stored thereon, wherein the computer program, when executed by a processor, performs steps of a temperature measuring method comprising:

    obtaining an electrical parameter of an oscillation circuit; and
    calculating a temperature of a susceptor based on the electrical parameter, wherein the susceptor is coupled to

the oscillating circuit.

FIG. 1

FIG. 2

FIG. 3

FIG. 4

FIG. 5

FIG. 6

FIG. 7

FIG. 8

FIG. 9

FIG. 10

| S100 |
| --- |
| Obtaining an electrical parameter of an oscillation circuit |

↓

| S200 |
| --- |
| Calculating a temperature of a susceptor according to the electrical parameter |

FIG. 11

FIG. 12

FIG. 13

## INTERNATIONAL SEARCH REPORT

| International application No. |
|---|
| **PCT/CN2023/078952** |

**A. CLASSIFICATION OF SUBJECT MATTER**

A24F 40/50(2020.01)i;A24F 40/40(2020.01)i;A24F 40/51(2020.01)i;A24F 40/57(2020.01)i

According to International Patent Classification (IPC) or to both national classification and IPC

**B. FIELDS SEARCHED**

Minimum documentation searched (classification system followed by classification symbols)

IPC: A24F 40/-; A24F 47/-

Documentation searched other than minimum documentation to the extent that such documents are included in the fields searched

Electronic data base consulted during the international search (name of data base and, where practicable, search terms used)

CNKI, CNABS, CNTXT, ENTXTC, ENTXT, VEN: 测温, 温度, 感受器, 振荡电路, 控制, 电容, 电感, 线圈, 电流, 电压, temperature, susceptor, oscillating circuit, control+, capacitor, coil, inductance, current, voltage

**C. DOCUMENTS CONSIDERED TO BE RELEVANT**

| Category* | Citation of document, with indication, where appropriate, of the relevant passages | Relevant to claim No. |
|---|---|---|
| PX | CN 114766740 A (SHENZHEN MAISHI TECHNOLOGY CO., LTD.) 22 July 2022 (2022-07-22) description, paragraphs 37-89, and figures 1-13 | 1-15 |
| E | CN 116046191 A (SEYMOUR INTERNATIONAL HOLDINGS LTD.) 02 May 2023 (2023-05-02) claims 1-16 | 1, 2, 11, 12 |
| X | CN 113826954 A (BYD CO., LTD.) 24 December 2021 (2021-12-24) description, paragraphs 46-58, and figures 1-6 | 1-15 |
| X | CN 111537099 A (CHINA TOBACCO YUNNAN INDUSTRIAL CO., LTD.) 14 August 2020 (2020-08-14) description, paragraphs 5-16, and figures 1-2 | 1-15 |
| X | CN 107764427 A (ZHANG YAN) 06 March 2018 (2018-03-06) description, paragraphs 18-27, and figures 1-3 | 1-15 |
| X | CN 111150114 A (HUIZHOU PEIGESI TECHNOLOGY CO., LTD.) 15 May 2020 (2020-05-15) description, paragraphs 35-41, and figures 1-7 | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2023** | **19 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/078952** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 106644139 A (GUANGDONG UNIVERSITY OF TECHNOLOGY) 10 May 2017 (2017-05-10)<br>      entire document | 1-15 |
| A | CN 110626187 A (ZHONGXING NEW ENERGY VEHICLE CO., LTD.) 31 December 2019 (2019-12-31)<br>      entire document | 1-15 |
| A | US 2020022412 A1 (BRITISH AMERICAN TOBACO (INVESTMENTS) LIMITED) 23 January 2020 (2020-01-23)<br>      entire document | 1-15 |
| A | WO 2021083344 A1 (SHENZHEN FIRST UNION TECHNOLOGY CO., LTD.) 06 May 2021 (2021-05-06)<br>      entire document | 1-15 |

Form PCT/ISA/210 (second sheet) (July 2022)

International application No.

**PCT/CN2023/078952**

| Patent document cited in search report | | | Publication date (day/month/year) | Patent family member(s) | | | Publication date (day/month/year) |
|---|---|---|---|---|---|---|---|
| CN | 114766740 | A | 22 July 2022 | None | | | |
| CN | 116046191 | A | 02 May 2023 | None | | | |
| CN | 113826954 | A | 24 December 2021 | None | | | |
| CN | 111537099 | A | 14 August 2020 | None | | | |
| CN | 107764427 | A | 06 March 2018 | None | | | |
| CN | 111150114 | A | 15 May 2020 | None | | | |
| CN | 106644139 | A | 10 May 2017 | None | | | |
| CN | 110626187 | A | 31 December 2019 | None | | | |
| US | 2020022412 | A1 | 23 January 2020 | BR | 112019020551 | A2 | 28 April 2020 |
| | | | | KR | 20210158889 | A | 31 December 2021 |
| | | | | KR | 102481404 | B1 | 23 December 2022 |
| | | | | PH | 12019502135 | A1 | 15 June 2020 |
| | | | | AU | 2023201344 | A1 | 06 April 2023 |
| | | | | CL | 2019002766 | A1 | 06 March 2020 |
| | | | | MX | 2019011800 | A | 07 November 2019 |
| | | | | LT | 3603332 | T | 10 August 2022 |
| | | | | JP | 2020516014 | A | 28 May 2020 |
| | | | | CA | 3057903 | A1 | 04 October 2018 |
| | | | | KR | 20230006029 | A | 10 January 2023 |
| | | | | EP | 3603332 | A2 | 05 February 2020 |
| | | | | EP | 3603332 | B1 | 25 May 2022 |
| | | | | WO | 2018178113 | A2 | 04 October 2018 |
| | | | | WO | 2018178113 | A3 | 13 December 2018 |
| | | | | JP | 2021192374 | A | 16 December 2021 |
| | | | | JP | 7179933 | B2 | 29 November 2022 |
| | | | | ES | 2918195 | T3 | 14 July 2022 |
| | | | | GB | 201705208 | D0 | 17 May 2017 |
| | | | | RU | 2021131848 | A | 19 November 2021 |
| | | | | JP | 2023010820 | A | 20 January 2023 |
| | | | | HUE | 058874 | T2 | 28 September 2022 |
| | | | | PL | 3603332 | T3 | 18 July 2022 |
| | | | | PT | 3603332 | T | 23 June 2022 |
| | | | | EP | 4064789 | A2 | 28 September 2022 |
| | | | | EP | 4064789 | A3 | 02 November 2022 |
| | | | | KR | 20190130021 | A | 20 November 2019 |
| | | | | KR | 102344986 | B1 | 28 December 2021 |
| | | | | RU | 2019134684 | A | 30 April 2021 |
| | | | | RU | 2019134684 | A3 | 16 November 2021 |
| | | | | AU | 2018241907 | A1 | 03 October 2019 |
| | | | | AU | 2018241907 | B2 | 24 September 2020 |
| | | | | AU | 2020294182 | A1 | 28 January 2021 |
| WO | 2021083344 | A1 | 06 May 2021 | EP | 4052599 | A1 | 07 September 2022 |
| | | | | EP | 4052599 | A4 | 04 January 2023 |

Form PCT/ISA/210 (patent family annex) (July 2022)

**EP 4 516 141 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104620046